# Europäisches Patentamt

## European Patent Office

## Office européen des brevets

(11) Publication number: **0 058 519**
**B1**

# EUROPEAN PATENT SPECIFICATION

(45) Date of publication of patent specification: **30.12.86**

(21) Application number: **82300674.7**

(22) Date of filing: **11.02.82**

(51) Int. Cl.⁴: **H 01 H 1/58,** H 01 R 35/00, H 02 B 11/04

(54) Electrical junction of high conductivity for a circuit breaker or other electrical apparatus.

(30) Priority: **12.02.81 US 233723**
**12.02.81 US 233721**

(43) Date of publication of application:
**25.08.82 Bulletin 82/34**

(45) Publication of the grant of the patent:
**30.12.86 Bulletin 86/52**

(84) Designated Contracting States:
**BE CH DE FR GB IT LI NL SE**

(56) References cited:
DE-B-1 233 043
US-A-3 603 753
US-A-3 739 120
US-A-3 941 959
US-A-4 146 766

(73) Proprietor: **WESTINGHOUSE ELECTRIC CORPORATION**
**Westinghouse Building Gateway Center**
**Pittsburgh Pennsylvania 15222 (US)**

(72) Inventor: **Milianowicz, Stanislaw Adam**
**106 Overlook Drive**
**Monroeville Pennsylvania (US)**

(74) Representative: **van Berlyn, Ronald Gilbert**
**23, Centre Heights**
**London, NW3 6JG (GB)**

## Description

This invention relates to electrical interconnection apparatus and more particularly to apparatus for interconnecting a circular stem with a relatively flat electrical conductor, or a stationary terminal.

Circuit breaker apparatus in general and vacuum circuit interrupter apparatus in particular are useful for controlling and protecting electrical systems, apparatus and networks. Circuit breaker apparatus and in particular vacuum circuit interrupter apparatus include separable main contacts disposed within an insulating housing. Generally one of the contacts is fixed relative to both the housing and to an external electrical conductor which is interconnected with the circuit to be controlled by the circuit interrupter. On the other hand, the other separable main contact is movable. In the case of vacuum circuit interrupter apparatus the movable contact assembly usually comprises a stem of circular cross section having the contact at one end thereof enclosed within the vacuum chamber and a driving mechanism at the other end thereof external to the vacuum chamber. A flexible gas-tight bellows separates the vacuum chamber from the external region. The bellow expands and contracts with the movement of the stem so as to allow stem movement while at the same time retaining the integrity of the vacuum. It has been found that the circular shape of the stem is desirable for interconnection with the bellows among other things. Often the electrical interconnection between the aforementioned external apparatus or circuit to be protected by the circuit interrupter and the movable contact is made on the circular stem. It can be seen therefore that a need arises for channeling significant amounts of electrical current from a movable stem to a stationary electrical terminal or contact. One of the most popular ways to accomplish this in the prior art is to utilize a flexible conductor such as braided copper wire or the like. Examples of this may be found in the specification of U.S. Patent Nos. 3,941,959; 4,091,251; 4,025,886 and 3,941,959. All of the aforementioned have certain problems relative to known electrical and mechanical properties of conductors. Of particular importance are the electrical characteristic of contact resistance, the mechanical characteristic of flexibility and the general characteristics of construction cost and simplicity and then interrelationship. For example, with respect to the electrical characteristic of contact resistance it has been found that when a single electrical conductor is fastened to another electrical conductor, electrical contact is made in only three relatively small regions between the two conductors. This is regardless of the size of the common surface area of the conductors. This means that a relatively large conductor with a relatively large surface area interconnected with another relatively large conductor and bolted in many places thereto would still only make effective electrical contact at three regions in the contiguous surface therebetween. If one of the large conductors was divided into a number of independent and more flexible small conductors having the same effective surface area and were bolted independently to the other conductor, each of the small conductors would now have three of its own regions of contact although the total contact resistance may not increase. If on the other hand, one of the conductors was divided into a number of independent small conductors having the same effective surface area and were bolted independently to the other conductor, each of the small conductors would now have three of its own regions of contact although the total contact resistance may not increase. Moreover, if a contact interrupter, for example, and a fixed electrical terminal could be made with a flexible interconnection having multiple independent contact surfaces, then with flexible braded copper wires, for example, the flexibility would be great, but the relative complexity and cost of separating the braided wires into multiple separate interconnections with the movable stem would increase considerably. However, in a case such as that the complexity and cost of the construction process would increase because now multiple conductors would have to be interconnected with one conductor rather than a single conductor being interconnected with a single conductor. It would be advantageous therefore if a contact arrangement between a stem of a vacuum circuit interrupter for example and a fixed electrical terminal could be made with multiple independent contact surfaces. Some problems associated with multiple three point contact areas is exemplified in previously referred to in the specification of U.S. Patent 3,941,959 where a single massive interconnecting block in attached to a movable stem. The size, weight, and current carrying capabilites of the block seems to be great. However, it is to be remembered that only one three point contact arrangement is made. It would be advantageous therefore to provide apparatus for removing current from a movable circular stem to a fixed terminal by way of a conductor where multiple three point electrical contact regions are established where the manufacturing process for installation is relatively simple, and where the flexible conductors were nevertheless stiff enough to prevent inadvertent contact with each other or with other apparatus in the vicinity of the circuit interrupter so that the use of insulation on the flexible electrical conductor can be avoided to thus retain flexibility and also provide enhanced heat dissipation characteristics.

Document US—A—3,739,120 discloses a circuit interrupter system comprising circuit interrupter means including separable contacts, one of which is connected with an external terminal, where said terminal is a stem having a predetermined cross-sectional shape, an external conductor connected to said stem, said conductor having a substantially flat planar portion with an opening therein, said opening having the same cross-sectional shape as said stem. The present invention relates to a circuit interrupter system of the above mentioned type, and is further characterised in that, said opening has a cross-sectional area smaller than the cross-sectional area of said stem, the periphery of said opening has at least two slits therein to form at least one tab which is offset from the plane of said flat planar portion when said opening is initially disposed around said stem thus initially to accommodate the difference in area; and in that compression means are provided, which cooperate with said external conductor and said stem to cause said at least one tab to deform and to flow consequently in the region of interface between said external conductor and said stem when the force of compression is applied with a substantial component normal to the plane defined by said flat planar portion.

Conveniently, the electrical apparatus includes an axial stem where the stem is generally circular in cross-section. A conductor is connected to the stem. The conductor is a generally flat inner portion with a central circular opening therein. The central opening has a smaller radius than the radius of the cross-section of the stem. The periphery of the central opening has a radial slit therein that allows the formation of the peripheral tab which is offset from the plane of the flat planar surface when the opening is initially disposed around the stem to thus initially accommodate for the difference in radii. Compression apparatus is disposed on the stem in a disposition of axial compression for causing the afore-mentioned tab to substantially realign with the plane of the planar portion after compression. The material of the tab thus assuming a flowed state in the region of the interface between the tab and the stem after compression to accommodate in the difference in radii. Multiple conductors are provided for reduced contact resistance relative to a given surface area and current capability of each conductor. Advantageously, in the electrical apparatus is disposed a movable electrical terminal which is movable in a given direction in relationship to a desired electrical terminal and an electrically conducting member which is fixedly attached to both the movable electrical terminal and the fixed electrical terminal to interconnect both electrically. The electrically conducting member is characterized as being substantially self-supporting in a span between the movable electrical terminal and the fixed electrical terminal, but nevertheless is flexible enough in a cantilevered manner for accommodating the movement of the movable electrical terminal.

The invention will now be described by way of example, with reference to the accompanying drawings in which:

Figure 1 shows an orthogonal front and side view of a metal enclosed circuit breaker system utilizing vacuum circuit interrupters;

Figure 2 shows a side orthogonal view of the apparatus of Figure 1;

Figure 3 shows a side elevation of the drawout circuit interrupter of Figures 1 and 2;

Figure 4 shows a front elevation of the drawout circuit interrupter of Figure 3;

Figure 5 shows a more detailed view of the circuit interrupter apparatus of Figures 2 and 3 in side elevation and partially in section;

Figure 6 shows detailed view of the bell crank apparatus for the circuit interrupter of Figure 5;

Figure 7 shows a top view of a single flat flexible conductor for utilization with the present invention;

Figure 8 shows a side view of the flexible conductor of Figure 7;

Figure 9 shows a side elevation of a top compression part for the stem mounting apparatus utilized with the circuit interrupter of Figure 5;

Figure 10 shows a top view of the apparatus of Figure 9;

Figure 11 shows a spacer for utilization on the apparatus of Figure 5;

Figure 12 shows the top view of apparatus of Figure 11;

Figure 13 shows another spacer for the utilization of Figure 5;

Figure 14 shows a top view of the apparatus of Figure 13;

Figure 15 shows an end spacer for the apparatus of Figure 5;

Figure 16 shows a top view of apparatus of Figure 15;

Figure 17 shows a side view of the end plate bell crank connector for the apparatus of Figure 5;

Figure 18 shows a top view of the apparatus of Figure 17;

Figure 19 shows a front elevation of the apparatus of Figure 17;

Figure 20 shows a more detailed view of the stem region of the apparatus of Figure 5 with emphasis on the cooperation of the elements shown in Figures 7 through 19;

Figure 21 shows a bottom view of the apparatus of Figure 20;

Figure 22 shows a view similar to that shown in Figure 20 but for the second embodiment of the invention;

Figure 23 shows a bottom view of the apparatus of Figure 22;

Figure 24 shows a flexible conductor similar to that shown in Figure 7 but for a still further embodiment of the invention; and

Figure 25 shows side elevation of circuit breaker apparatus utilizing the flexible conductor of Figure 24.

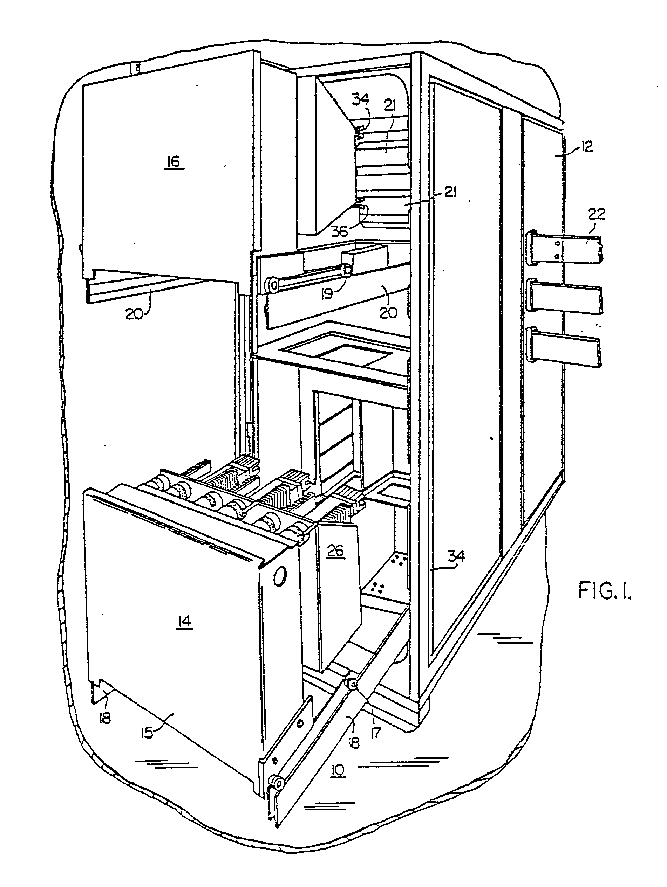

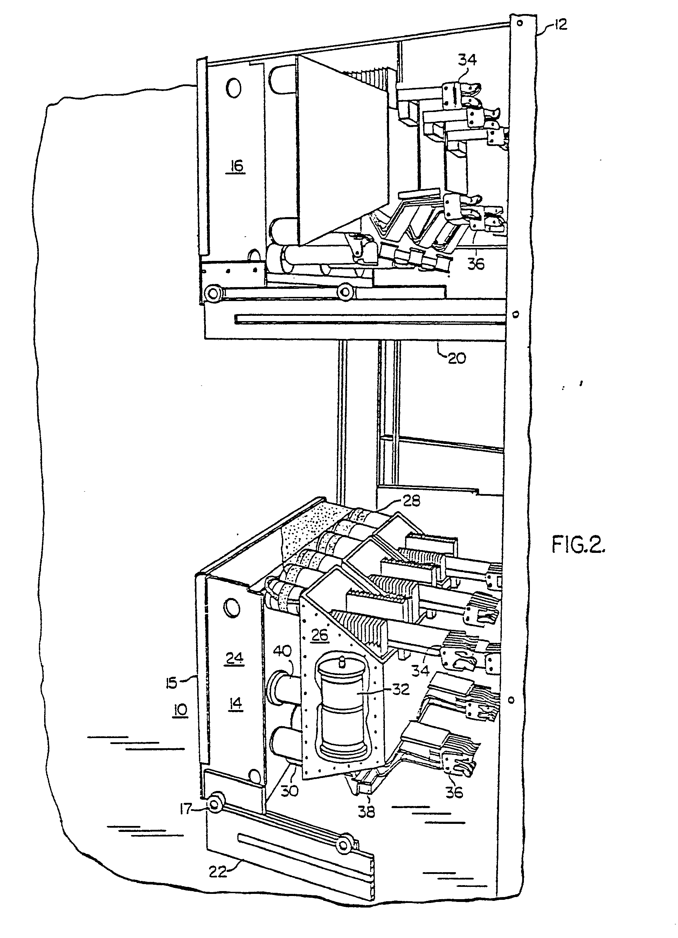

Figures 1 and 2 show an embodiment of the invention for metal clad or metal enclosed switchgear 10 which includes a metal cabinet or enclosure 12 which may have tandemly and vertically disposed therein drawout three-phase vacuum circuit interrupter apparatus 14 and 16. The front panel 15 may have controls thereupon for manually operating the circuit interrupter apparatus. The lower circuit interrupter apparatus 14 as shown in Figures 1 and 2 is movably disposed by way of wheels 17 on rails 18 for moving the circuit breaker apparatus 14 into and out of a disposition of electrical contact with live terminals (not shown) disposed in the rear of the cabinet 12. Likewise the upper circuit interrupter apparatus 16 is movably disposed by way of wheels 19 on rails 20 for moving the upper circuit interrupter apparatus into and out of a disposition of electrical contact with terminals (not shown) in the rear of metal cabinet 12. Movable shutters such as shown at 21 may be interposed between the terminals 34 and 36, for example, of either of the three-phase drawout circuit interrupters 14 and 16 for shielding the cabinet high-voltage terminals from inadvertent contact therewith when the three-phase circuit interrupters 14 and 16 have been withdrawn to the position shown in Figure 1. Barriers 21 are mechanically moved from in front of the aforementioned terminals when the three-phase circuit interrupters 14 and 16 are moved into a disposition of electrical contact with the aforementioned high-voltage terminals.

As is best shown in Figure 2 the three-phase circuit interrupter apparatus 14, for example, may include a front portion 24 in which controls and portions of an operating mechanism are disposed and a rear portion 26. The front portion 24 is generally a low-voltage portion and the rear portion 26 is generally a high-voltage portion. The high-voltage portion 26 is supported by and electrically insulated from the low-voltage portion 24 by way of upper and lower insulators 28 and 30, respectively. Disposed within the high-voltage or rear portion 26 are vacuum circuit interrupter bottles 32 which provide circuit interrupting capability between the three-phase terminals 34 and 36, for example. The motion and information for opening and closing the contacts of the vacuum circuit interrupter bottles 32 may be supplied by way of linkage 38 from the front portion 24 to the rear portion 26.

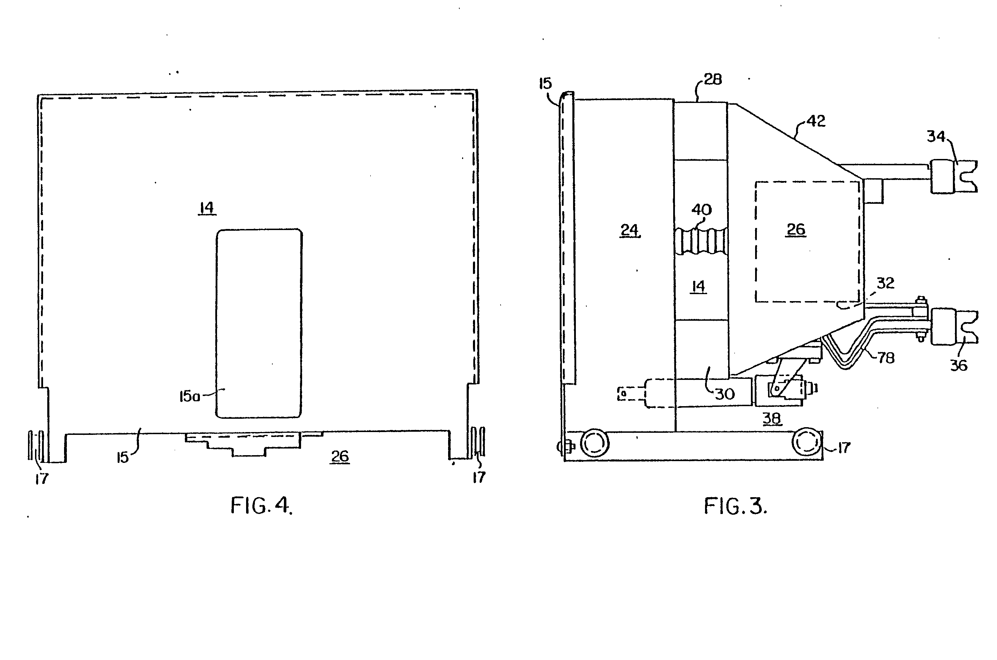

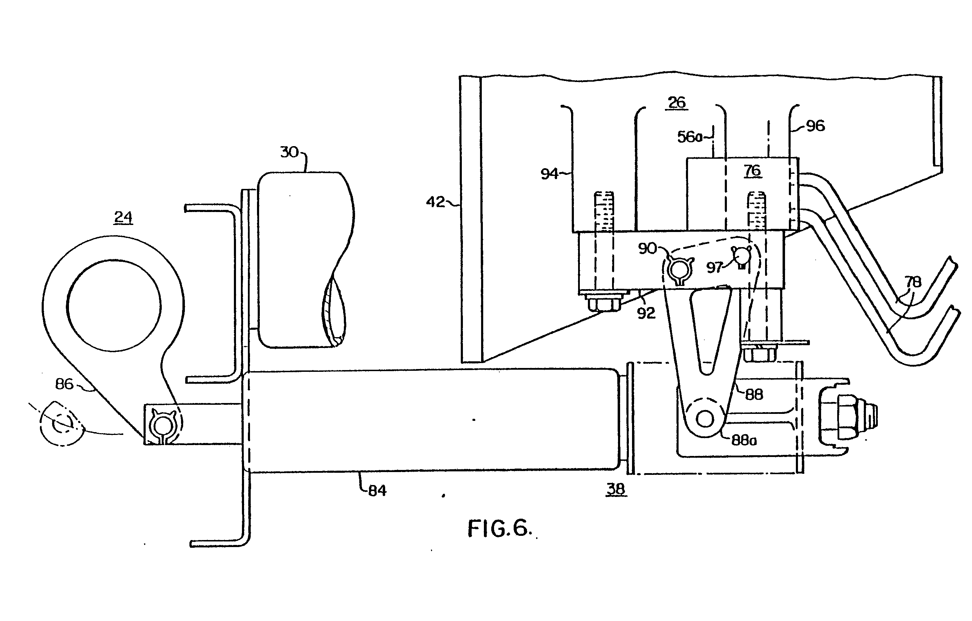

Referring now to Figures 3 and 4, a simplified side elevation and front elevation, respectively, of the drawout circuit interrupter apparatus 14 of Figures 1 and 2 are shown. The linkage 38 is disposed between the low-voltage portion 24 and the high-voltage portion 26 for the purpose of carrying force which may originate in the low-voltage portion 24 to the high-voltage portion 26 for opening or closing the contacts of the vacuum circuit interrupter 32. A more detailed description of the construction and operation of the mechanism 38 is described hereinafter with respect to Figure 6. Of particular importance with respect to the preferred embodiment of the present invention is the apparatus for interconnecting the movable stem (not shown) of the circuit interrupter apparatus 32 with the high-voltage contact 36 by way of a stiff, yet flexible, electrical conductor assembly 78.

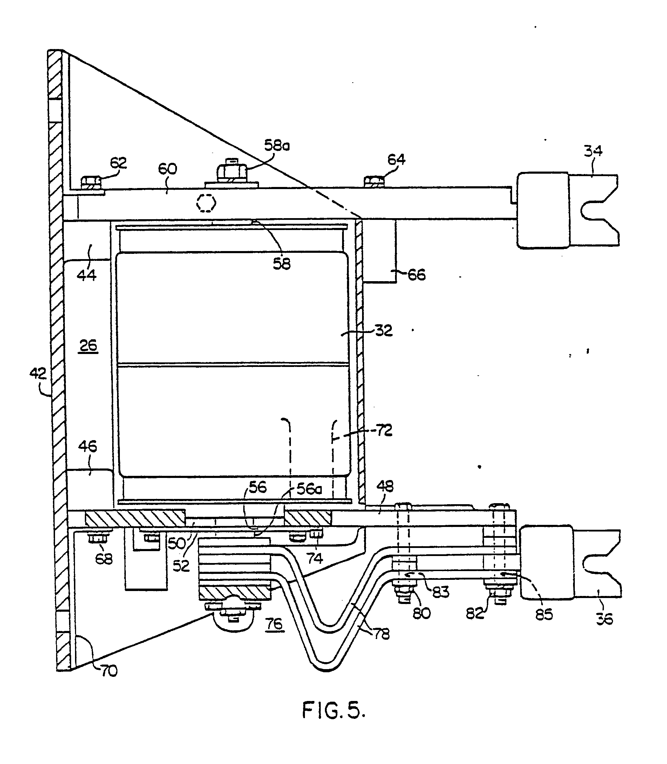

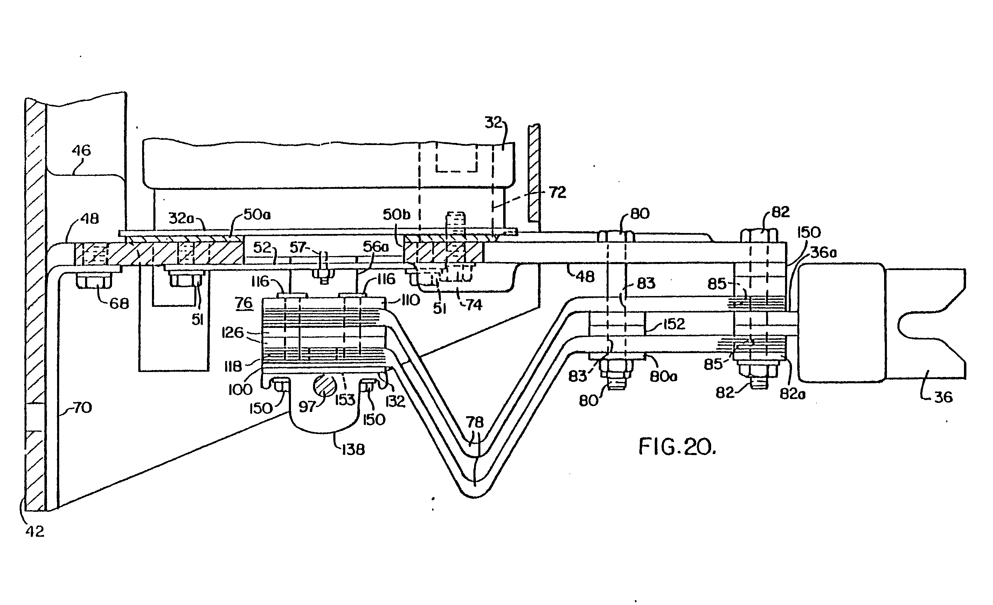

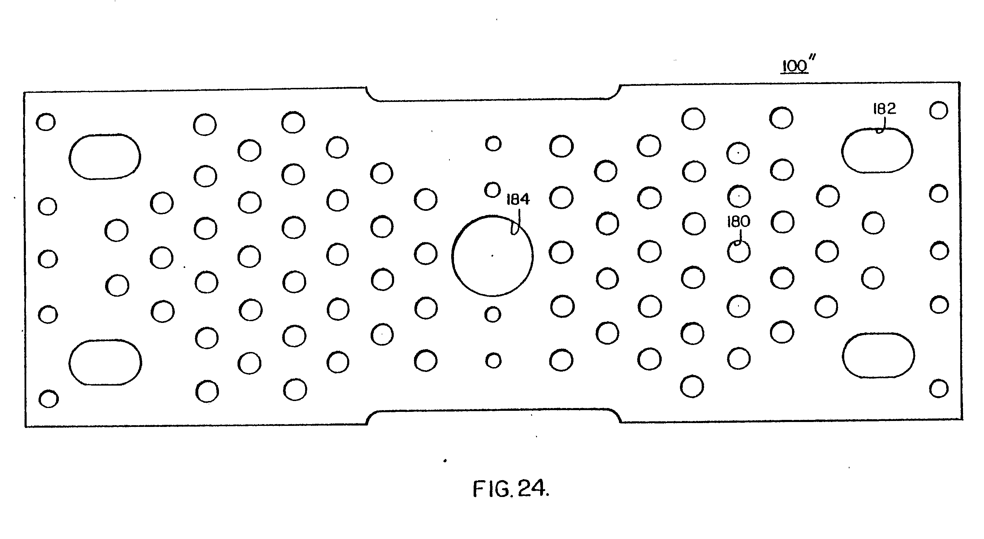

Referring now to Fig. 5, Fig. 20 and Fig. 21, a circuit interrupter vacuum bottle 32 as well as the stiffened flexible conductor assembly 78 and an attachment device 76 are shown in detail. In particular there is provided an electrically insulated support member housing 42 having rearwardly (i.e. to the right in the figures) extending abutments 44 and 46 with vertically oriented threaded internal holes therein for accepting complementary bolt members. The lateral arrangement of abutments and bolt members is utilized to support the circuit interrupter bottle apparatus 32 and associated contact members 34 and 36, for example. A rearwardly extending aluminum support member 48 is fastened by way of bolt member 68 to the bottom of the aforementioned abutment 46 at the left as shown in Figures 5 and 24, for example. An abutment member 72 which protrudes from the side wall of the aforementioned insulating housing 42 cooperates with a vertically oriented bolt member 74 to secure another portion of the aluminum support member 48 to a sidewall of the housing 42. The housing 42 is conveniently supported by the horizontally extending insulators 28 and 30 as is best shown in Figure 3, for example. A circular opening 50b is disposed in the support member 48. Opening 50b has a radius generally equal to the radius of a bottom portion of the circuit interrupter vacuum bottle apparatus 32. The latter two portions interact to seat the circuit interrupter apparatus 32 in the horizontal support plate 48. A rectangular member 52 having a central circular hole 56 disposed therein is securely fastened to the underside of the support member 48 by way of bolts 51 which protrude upwardly into threaded complementary openings in the support member 48. Adjustable bolt members 57 protrude upwardly through plate 52 to adjustably bear against the aforementioned circular end portion 50 of the circuit interrupter 32 to maintain the conducting end plate 32a thereof vertically spaced from the top of the aluminum support plate 48. The vertical spacing is represented at 50a, for example, in Figure 20. This prevents significant electrical current from flowing through the aforementioned aluminum support plate 48. The bottom contact stem 56a of the movable contact of the vacuum circuit interrupter 32 protrudes downwardly through the opening 56 in the aforementioned rectangular plate 52. Layered conductor packets or assemblies 78 are interconnected with the aforementioned stem 56a by way of the aforementioned interconnection assembly 76.

Referring now specifically to Figure 5 it can be seen that the stiffened flexible conductor assemblies 78 are partially supported below the support member 48 by way of securing nut and bolt assemblies 80 and 82. The nut and bolt assembly 82 also interconnects the conductor assemblies 78 with the electrical terminal 36. The characteristic V-shaped pleat or undulation in the conductor assembly 78 horizontally compresses the assemblies between the assembly 76 and the terminal 36 without reducing flexibility for accommodating the travel of the stem 56a in the vertical direction. An electrically conducting support member 60 is bolted to and supported by horizontal protrusions 44 and 46 of the aforementioned electrically insulating housing member 42. Bolts 62 and 64 are provided for vertically securing member 60 to the protrusions 44 and 66 from the top, respectively. The upwardly extending stem of the generally nonmoving contact of the circuit interrupter bottle 32 is securely attached to the electrically conducting member 60 by way of securing bolt 58a. Disposed at the rightward end of the electrically conducting member 60 as viewed in Fig. 5 is the aforementioned high voltage terminal 34.

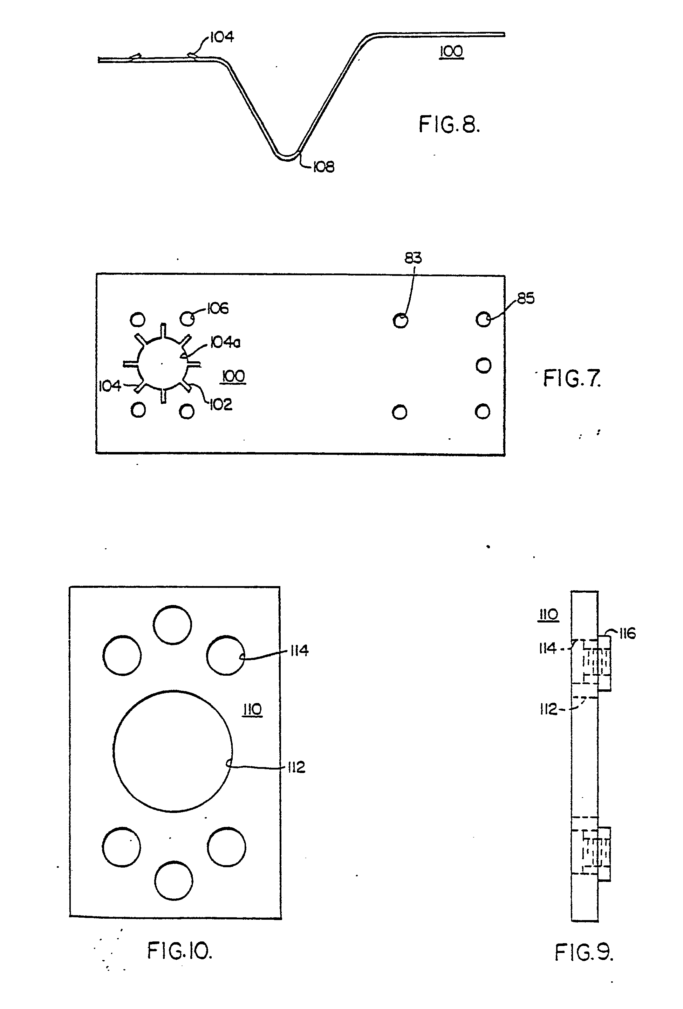

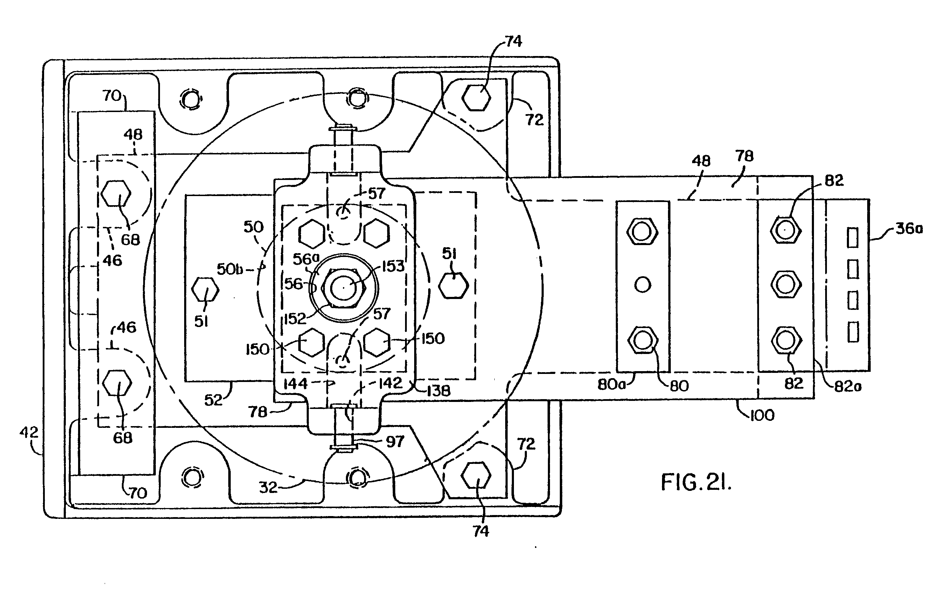

Referring now to Figures 7 through 19 the component parts of the attachment assembly 76 and the conductor assembly 78 are depicted. By referring to these latter-mentioned Figures in conjunction with previously described Figures 20 and 21 the construction and operation of the stiff flexible conductors and the way they are attached to the stem 56a is described in detail.

Referring specifically to Figures 7 and 8 a unitary stiff, yet flexible, electrically conducting member 100 is shown. The member 100 is stiff in that it has the characteristics of being able to support itself in the horizontal without completely drooping to the near vertical disposition as braided copper wire would do in a similar circumstance. However, it is flexible enough to accommodate a certain amount of vertical movement at one end when it is disposed in the horizontal disposition. A pleat 108 is disposed therein for purposes described previously. At one end of the relatively flat rectangularly shaped thin member 100 is disposed an opening 104a having a radius slightly smaller than the radius of the stem 56a of the circuit interrupter bottle 32. Radial slits or cutouts 102 are disposed around the periphery of the opening 104a thus forming tabs 104 which are then slightly offset from the flat planar surface of the member 100 as is best shown in Figure 8. Holes or openings 83 and 85 are disposed in the other end of the relatively flat member 100 for interconnection with the fastening apparatus 80 and 82, respectively, as was described previously with respect to Figure 20. The use of the aforementioned tabs 104 will be described hereinafter.

Referring now to Figures 9 and 10, a nonmagnetic steel rectangularly shaped compression member 110 is depicted. Member 110 has a central opening 112 which is of sufficient diameter to allow the stem 56a to easily pass therethrough. Outwardly disposed therefrom are openings 114 into which are pressed internally threaded members 116 for accepting complementary threaded portions of bolt members 150 shown in Figure 20.

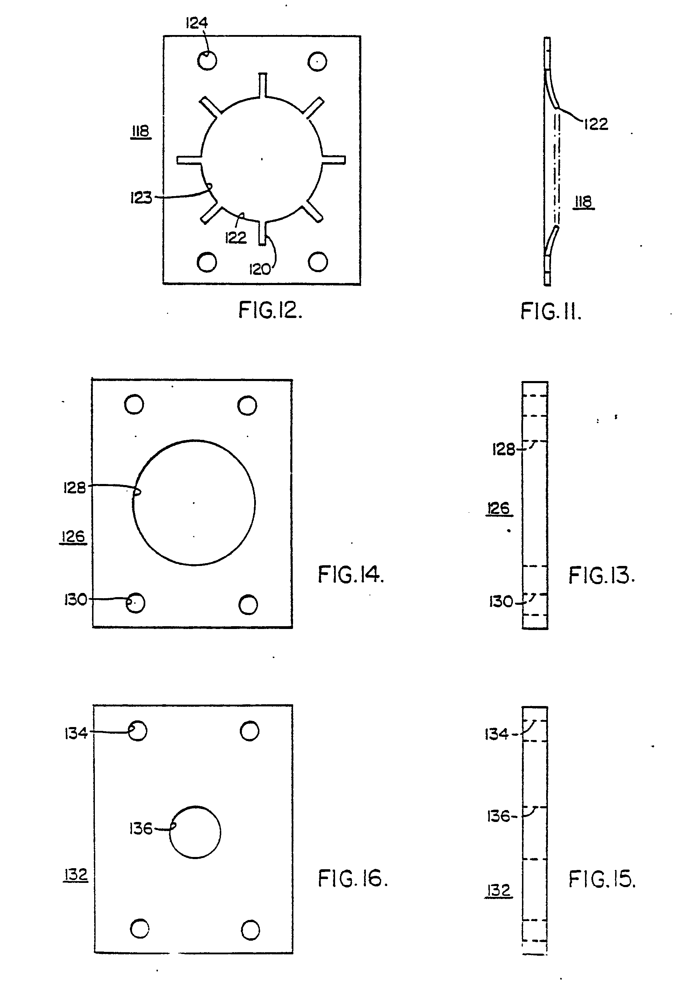

Referring now to Figures 11 and 12 a copper tabbed compression member 118 is shown. The copper tabbed compression member 118 has a circular central opening 123 which is generally of the same diameter as the central opening 104a of the member 100 shown in Figure 7, for example. Slits or cutouts 120 are radially placed around the central opening 123 in a manner similar to that described with respect to the member 100 of Figure 7. Consequently, offset tabs 122, best seen in Fig. 11, similar to tabs 104 of Figures 7 and 8 are formed. In a like manner outwardly disposed holes or openings 124 are placed in the member 118 for alignment with similar holes or openings 106 in the member 100. In a preferred embodiment of the invention a plurality of alternating members 100 and 118 are disposed around an axial portion of the shaft of the stem 56a of the circuit interrupter bottle 32 thus forming a flexible electrically conducting portion 78 such as shown in Figure 20. It will be noted that the alternating arrangement of the members 100 and 118 form a plurality of separated flexible electrical conductors within each electrically conducting portion, packet or assembly 78. Each of the members 100 makes "three-point" electrical contact with the stem 56a. Consequently, if there are ten of the members 100, for example, in a typical section 78, thirty points of electrical contact will be made with the stem 56a. This has a tendency to decrease contact resistance for a given volume of electrical conductor while at the same time rendering the contact portion 78 relatively flexible. The aforementioned tab members 104 and 122 when stacked in the previously described alternating arrangement and compressed axially of the stem 56a deform to flow around the surface of the stem 56a to accommodate the smaller radius of the circular holes 123 and 104a thus, providing reduced electrical contact resistance between the members 100 and the stem 56a.

Referring now to Figures 13 and 14 an intermediate compression member 126 is depicted. Member 126 has a central opening 128 which has a radius sufficiently large to allow the stem 56a to conveniently pass therethrough without deformation. Furthermore, four openings 130 may be provided which align with the openings 124 of the member 118 and the openings 106 of the conducting member 100, for example. The purpose of the utilization of the member 126 will be described more fully hereinafter.

Referring now specifically to Figures 15 and 16 a compression member 132 which is similar to compression member 126 is depicted. Compression member 132 differs from compression member 126 in that the central opening 136 of the compression member 132 is significantly smaller in radius than the central opening 128 of the member 126. This is due to the fact that the lower end portion of the shaft 56a has a reduced-radius threaded portion thereof which conveniently fits through the opening 136 so that the member 132 may conveniently fit over the threaded portion without fitting over the main shaft of the stem 56a. This is essence abuts the member 132 against the bottom of a significant portion of the stem 56a.

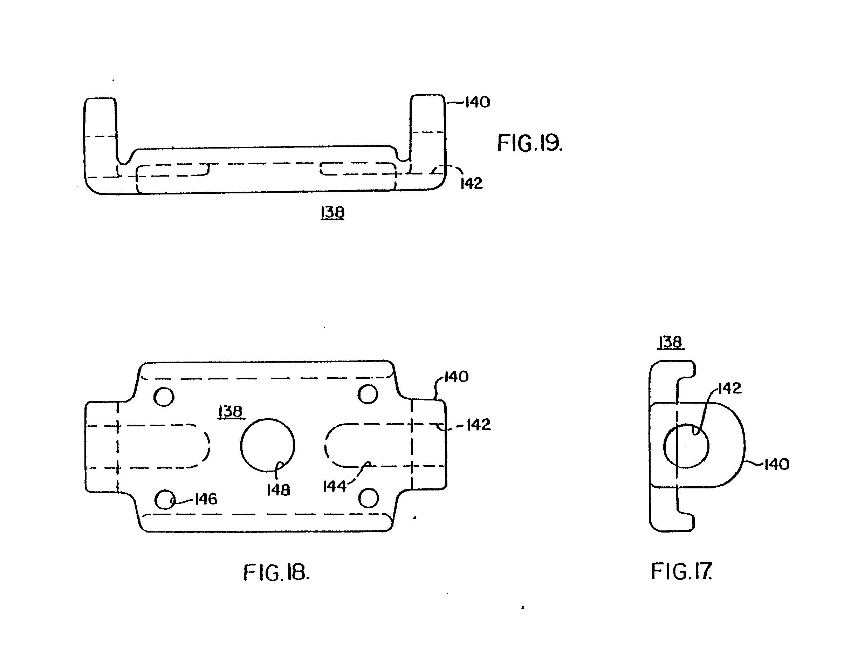

Referring now to Figures 17, 18 and 19 a metal bell crank-to-stem force transfer member 138 is depicted. Member 138 has vertically rising lips 148 on two opposing sides thereof and relatively larger vertically rising members 140 on the other two opposing sides thereof. Holes or openings 146 which align with the previously described holes or openings 130, 134, 124 and 106 are provided. Furthermore, a central opening 148 which fits around the reduced threaded portion of the shaft 56a much in the way that the hole 136 of member 132 does is also shown. In the vertically rising portions 140 a circular hole 142 is disposed for interconnection with pivot pins 97 of the bell crank assembly in a manner to be described hereinafter with respect to Figure 6.

Referring once again to Figure 20 the intercooperation of the elements of Figures 7 through 19 in forming the electrically conducting tap-off assembly 76 is described. In the construction process the central opening 112 of the member 110 is passed along the shaft 56a. Next, a plurality of stacked alternating members 110 and 118 are slid over the shaft 56a. It is to be noted with respect to the tabs 122 and 104 of members 118 and 100, respectively, that the offset thereof from the flat surface slightly increases the diameter of the hole 123 and 104a, respectively, so that the stacked alternating members may be easily slid over the shaft 56a. Next, in a preferred embodiment of the invention two spacers 126 are slipped onto the shaft. Next, another assembly 78 which includes alternating members 100 and 118 are formed along the shaft in a manner previously discussed. Next, electrically conducting member 132 with its reduced central opening 136 is disposed over the threaded portion of the shaft 56a and abuts against the shoulder between the reduced threaded portion and the enlarged shaft of the member 56a. Finally, in this embodiment of the invention the member 138 is disposed in a manner shown with respect to Figure 20 and a bolt (not shown in Figure 20) is disposed over the reduced threaded portion of the member 56a thus compressing the main body of the member 138 against the member 132 and thus against the lower shoulder of the shaft 56a thus securing the latter two members to the shaft 56a. Lastly, bolt members 150 are fed through holes 146 of member 138, holes 134 of member 132, holes 106 of member 100, holes 124 of member 118, holes 130 of member 126 and finally into the threads of the lipped members 116 of the uppermost compression member 110. The bolts 115 are then drawn tight thus compressing or sandwiching all of the aforementioned members together causing the aforementioned tabs 104 and 122 to align themselves with the planes of the surface in which they are disposed thus causing the openings 104a and 123 to reduce in radius thus causing the edges of the tabs to cold flow around the stem 56a. This then provides a convenient way to interconnect a circular vertically moving member 56a with a relatively stationary terminal such as 36 shown in Figure 20. This is done with a high degree of reduced electrical surface contact resistance and with sufficient flexibility to allow the shaft 56a to move upwardly and downwardly (with respect to Figure 20) to thus accommodate the opening and closing of the contacts of the circuit interrupter bottle 32. A single non-layered assembly for replacing assembly 78 would be too stiff to accommodate the movement of the stem 56a. The geometry of assembly 78 is such that each member 100 therein can independently move in a limited way between the stem 56a and the first tie down point at 80.

Referring now to Figure 6 the linkage arrangement 38 for interconnecting the circuit interrupter of the high-voltage section 26 with a force providing apparatus such as a motor or crank in low-voltage section 24 is shown. A crankshaft member 86 may be pivotally attached to an insulating rod 84 the other end of which is interconnected with one pivot pin 88a of a bell crank 88. There are disposed in the previously mentioned insulating housing support member 42 two horizontal protrusions 94 and 96 which are utilized to vertically support an insulating base 92 on which the aforementioned bell crank 88 is pivoted at 90. A third pivot 97 of the bell crank member 88 is interconnected with the member 138 in the journals 142 thereof so that the shaft 56a may move upwardly and downwardly as viewed in Figure 6 as the crank mechanism 86 rotates causing the insulating shaft 84 to move in a substantially horizontal direction is shown in Figure 6. Of course, as shaft 56a moves upwardly and downwardly the electrically interconnecting attachment device 76 and its associated stiff flexible contact portions 78 move upwardly and downwardly in a corresponding fashion. Were it not for the flexibility of the portion 78 the member 76 would deter or prevent the stem 56 from operating under the influence of the bell crank 88. Regardless of the flexibility of the member 78, however, the unique arrangement of the interconnection in the interconnecting device 76 provides for low resistance contact between the stem 56 and the flexible conductors 78.

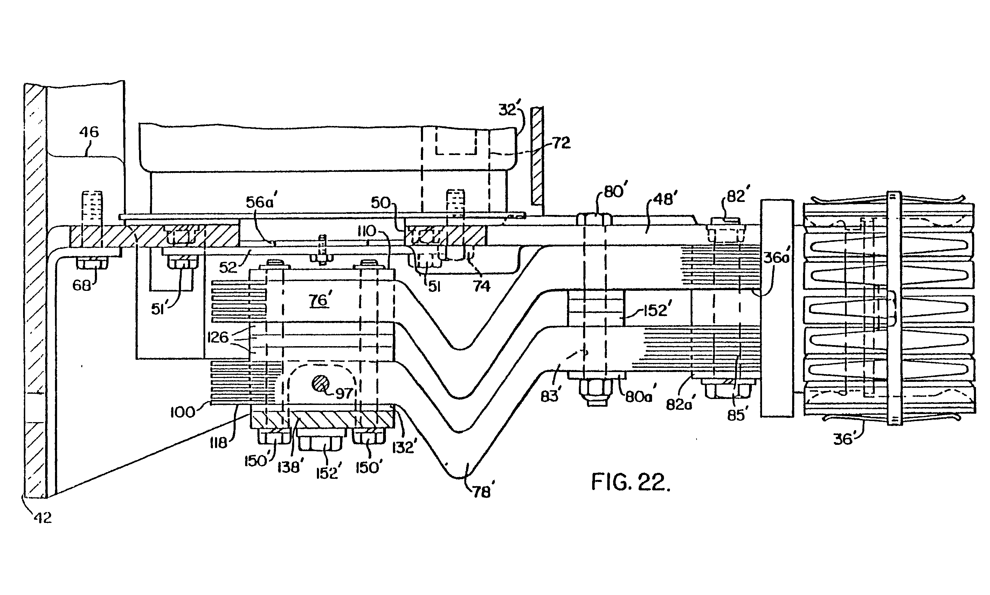

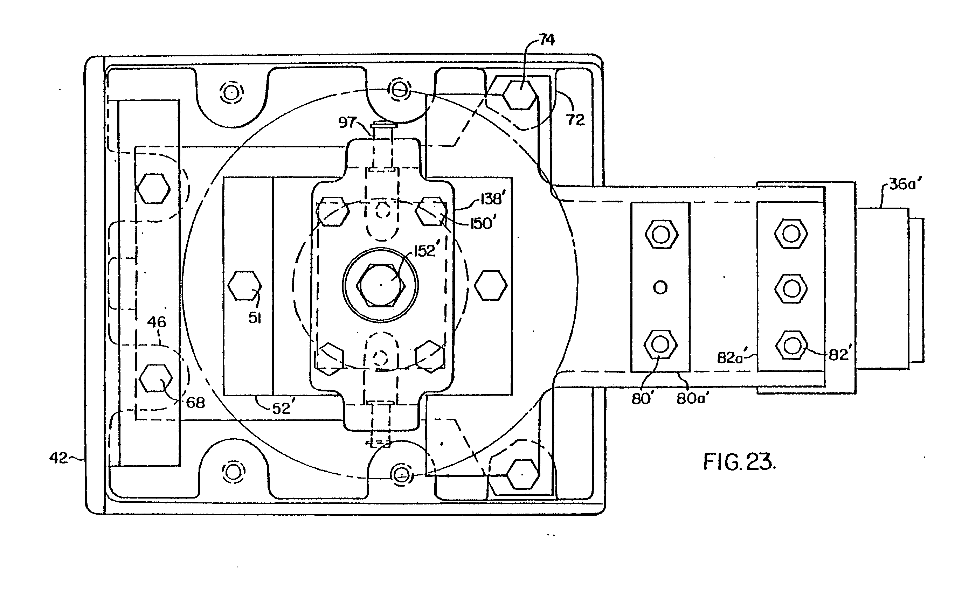

Referring now to Figures 22 and 23 another embodiment of the invention is shown which is useful for relatively higher ranges of operating current. Generally like elements are identified by like reference symbols Figures in regard to other embodiments and drawings of this invention. Similar elements are identified with primed (') reference Figures. For example, the circuit interrupter bottle of the embodiment of Figures 22 and 23 is identified by the reference symbol 32' indicating that it is different from the circuit interrupter 32 of other embodiments and other Figures. Generally, elements 100', 110' and 118', 126', 132' and 138' are similar but relatively larger than elements 100, 110, 118, 126, 132 and 138 of Figures 20 and 21. Two notable differences lie in the fact that the central circular opening in the present case is larger than the corresponding central circular openings 104a, 112, 123, 128, 136 and 148, respectively. Further, the bolt holes in the present embodiment are slightly larger in diameter and further offset from the center of each element than the corresponding bolt holes 106, 114, 124, 130, 134 and 146 of the embodiments of Figures 20 and 21. Still further differences lie in the fact that three spacer elements 126' are utilized rather than two, and that more interleaved combinations of the elements 118' and 100' are utilized per packet or portion of flexible electrical conductor 78' than in the other embodiment of the invention and that the bell crank interconnecting insulating device 138' is utilized in a reversed or upside down disposition relative to the embodiments of Figures 20 and 21. With regard to the interconnection of the electrically conducting flexible portions or packets 78' in the present embodiment of the invention it should be noted that the aforementioned portions 78' are interconnected with a main terminal 36' at interconnecting portion 36a' by the utilization of an interconnecting bolt and fastening apparatus 82'. Spacers 152' associated with bolt 80' also differ from the spacer arrangement shown with regard to Figure 20, for example. It is also to be noted that the terminal 36' is of a larger size and different construction than the terminal 36 of Figure 20, for example. Otherwise, the operation of the apparatus shown in Figure 22 is similar to the operation of the apparatus shown in Figure 20 in that a bell crank member (not shown) interconnected at 97 with the interconnecting member 38' is utilized to cause the stem 56a' to move upwardly and downwardly to close and open, respectively, the contacts of the vacuum circuit interrupter apparatus bottle 32' while the flexible conductors of the packets or portions 78' move or flex accordingly.

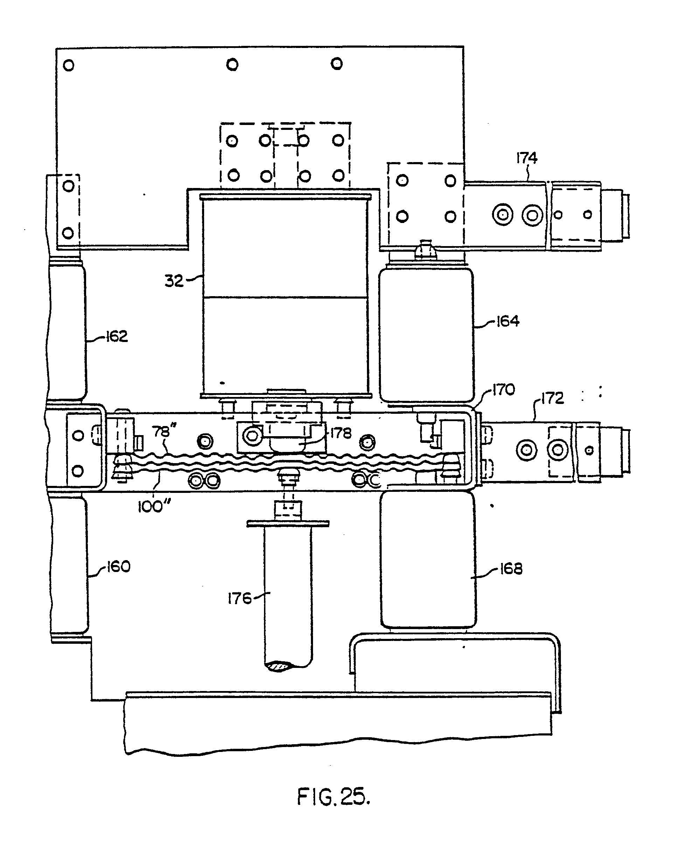

Referring now to Figures 24 and 25 still another embodiment of the invention is shown in which a vacuum circuit interrupter 32 is disposed electrically between two high-voltage terminals 172 and 174. The aforementioned high-voltage terminals and vacuum interrupter are insulatingly spaced apart at appropriate places by the insulators 160, 162, 164 and 168. Electrical interconnecting apparatus shown at 178 is utilized in cooperation with an insulating movement providing means 176 to cause packets 78″ of stiff flexible conductors 100″ to remove current from the circuit interrupter bottle 32. By reference to Figure 24 a top view of a stiff flexible conductor 100″ is shown. Four holes 182 are disposed at the ends of the conductor 100' and a central hole 184 is disposed in the center to accommodate the interconnection between the force providing apparatus 176 and the stem interconnection apparatus 178 of Figure 25. Because of the relatively large current carrying capability of the conductor 100″ offset holes 180 are disposed in the main body of the conductor to assist in dissipating heat. Furthermore, as is best seen in Figure 25 the entire conductor 100″ is disposed between the insulators 160 and 168 to provide a larger heat radiating surface than would normally be found if the conductor were merely disposed between the connecting portion 178 and the insulator 168. This means that electrical current substantially flows in that portion of the conductor 100″ between the connecting member 178 and the terminal 172, for example, while virtually no current flows to the left towards insulator 160. As can also be seen in Figure 25 the conductors 100″

are fabricated to have an accordion-shaped, pleated-shaped or undulating side elevation. This not only enhances the heat dissipation characteristics but provides for utilizing the entire flexible characteristic of the conductor 100″ while reducing the distance between the members 178 and 172, for example.

It is to be understood with respect to the embodiments of this invention that the concepts taught here are not limited to use with vacuum circuit interrupters. Moreover, it is to be understood that the number of tabs around the periphery of the central opening is not limiting. It is also to be understood that the particular compression apparatus for causing the offset tabs to become realigned with the plane of the conductor is not limiting. It is also to be understood that the apparatus taught herein is not limited to use with a circular stem but further may be used with other geometric shapes provided the teachings herein concerning the compression of the tabular members and a flowing of the electrically conducting member around the stem member are followed. It is also to be understood that the number of packets 78, 78' or 78″ are not limiting.

The apparatus taught with respect to the embodiments of this invention has many advantages. One advantage lies in the fact that current may be transferred from an elongated terminal stem or conductor to a relatively flat conductor by utilizing the teachings of the present invention. In a preferred embodiment of the invention electrical current may be transferred from a circular member through a high conductivity, low resistant joint to a relatively flat member. Another advantage lies in the fact that by using multiple flat conductors in conjunction with a single circular stem in a laminate and tab construction a given volume of copper in a circular to flat interface of multiple three-point contacts may be utilized for transferring current between the latter two members through an interface of significantly reduced contact resistance.

The apparatus taught with respect to the embodiments of this invention has many advantages. One advantage lies in the fact that current may be transferred from a movable terminal stem or conductor to a relatively fixed conductor by utilizing the teachings of the present invention. Another advantage lies in the fact that a contact resistance in the current carrying capabilities of a given amount of electrical conductor may be retained while the conductor is rendered more flexible by utilizing the concepts of the teachings of this invention. Another advantage lies in the fact that higher ratings may be enjoyed for a given amount of electrical conductor and for given space limits by utilizing the concepts of the teachings of this invention.

**Claims**

1. A circuit interrupter system comprising circuit interrupter means (32) including separable contacts, one of which is connected with an external terminal, where said terminal is a stem (56) having a predetermined cross-sectional shape, an external conductor (78) connected to said stem (56), said conductor (78) having a substantially flat planar portion with an opening therein, said opening having the same cross-sectional shape as said stem (56), characterised in that, said opening has a cross-sectional area smaller than the cross-sectional area of said stem, the periphery of said opening has at least two slits (102) therein to form at least one tab (104) which is offset from the plane of said flat planar portion when said opening is initially disposed around said stem (56) thus initially to accommodate the difference in area; and in that compression means (110, 118, 126, 132) are provided, which cooperate with said external conductor (78) and said stem (56) to cause said at least one tab (104) to deform and to flow consequently in the region of interface between said external conductor (78) and said stem (56) when the force of compression is applied with a substantial component normal to the plane defined by said flat planar portion.

2. A circuit interrupter system as claimed in claim 1, in which the compression means (110, 118, 126, 132) is disposed upon said stem (56) in a disposition for causing said tab (104) to substantially realign with said plane of said planar portion, the material of said tab assuming a flowed state in the region of the interface between said tab and said stem after compression to accommodate for the difference in area.

3. A circuit interrupter system as claimed in claim 1 or 2, in which said stem (56) is substantially circular in cross section, the conductor (78) connected to said stem, said conductor having the flat planar portion with the opening therein, said central opening having a smaller radius than the radius of the cross section of said stem, said periphery of said central opening having radial slits therein that allow the formation of peripheral tabs which are offset from the plane of said flat planar surface when said opening is initially disposed around said stem to thus initially accommodate for the difference in radii, and the compression means disposed upon said stem in a disposition of axial compression for causing said tabs to substantially realign with said plane of said planar portion after compression, the material of said tabs assuming a flowed state in the region of the interface between said tabs and said stem after compression to accommodate for the difference in radii.

4. A circuit interrupter system as claimed in claim 3 including a plurality of said external conductors and a plurality of said compression means interdisposed upon said stem in a disposition of common compression.

5. A circuit interrupter system as claimed in claim 4 wherein said interdisposition is one of alternation between said compression means and said external conductors.

6. A circuit interrupter system as claimed in any one of claims 1 to 5 including metal clad switchgear (10) comprising metal cabinet means (12), cabinet terminal means disposed in said cabinet means, the circuit interrupter means including the separable main contacts one of which communicates electrically with an external circuit interrupter terminal, the external conductor means connected between said external circuit interrupter terminal and said cabinet terminal means, said conductor means being characterized by the opening therein which is deformable to accommodate placement of said external conductor means on said circuit interrupter terminal, and the compression means cooperating with said external conductor means and said circuit interrupter terminal to cause the material of said conductor to flow in the region of said interface between said external conductor means and said circuit interrupter terminal when the force of compression is applied with a substantial component normal to the plane of flow.

7. A circuit interrupter system, as claimed in any one of claims 1 to 6, in which are provided movable electrical terminal means movable in a given direction in relationship to a desired electrical function, fixed electrical terminal means, and the electrically conducting member fixedly attached to both said movable electrical terminal means and said fixed electrical terminal means and interconnecting both electrically, said electrically conducting member being characterized as being substantially self-supporting in the span between said movable electrical terminal means and said fixed electrical terminal means but nevertheless being flexible in a cantilever manner for accommodating the movement of said movable electrical terminal means.

8. A circuit interrupter system as claimed in claim 7 wherein the length-to-thickness ratio of said conducting member is sufficient to allow said movable electrical terminal means to move through a predetermined distance in said direction without incurring significant mechanical resistance to said movement from said conducting member.

9. A circuit interrupter system as claimed in claim 8 wherein said span is shorter than said length, said conducting member having a lengthwise undulation therein to accommodate said length within said span.

10. A circuit interrupter system as claimed in claim 8 or 9 including a plurality of said conducting members stacked in the direction of said movement, the surface of each being relatively movable in the lengthwise direction to accommodate the flexible movement of each.

11. A circuit interrupter system as claimed in claim 10 including a electrically insulating spacer (126) between two adjacent conducting members in said stack to prevent arcing therebetween.

**Revendications**

1. Système de coupure de circuits comportant un moyen (32) de coupure de circuits qui comprend des contacts séparables, dont l'un est connecté à une borne extérieure, dans lequel cette borne est une tige (56) ayant une forme prédéterminée en section droite, un conducteur extérieur (78) connecté à cette tige (56), ce conducteur (78) ayant une partie sensiblement plane comportant une ouverture, cette ouverture ayant en section droite la même forme que la tige (56), caractérisé en ce que cette ouverture a en section droite une surface intérieure à la surface en section droite de la tige, la périphérie de cette ouverture présente au moins deux fentes (102) de manière à former au moins une patte (104) qui est décalée par rapport au plan de la partie plane lorsque l'ouverture est initialement disposée autour de la tige (56) afin de rattraper, dès le début, la différence de surface; et en ce que des moyens (110, 118, 126, 132) de compression sont prévus pour coopérer avec le conducteur extérieur (78) et la tige (56) afin d'obliger cette patte (104) au moins à se déformer et à fluer en conséquence dans la région de l'interface entre le conducteur extérieur (78) et la tige (56) lorsque la face de compression est appliquée avec une composante sensible perpendiculaire au plan formé par la partie plane.

2. Système de coupure de circuits suivant la revendication 1, dans lequel les moyens de compression (110, 118, 126, 132) sont placés sur la tige (56) selon une disposition qui oblige la patte (104) à se réaligner sensiblement dans le plan de la partie plane, la matière constituant cette patte prenant un état de fluage dans la région de l'interface entre la patte et la tige après compression afin de rattraper la différence de surface.

3. Système de coupure de circuits suivant l'une des revendications 1 ou 2, dans lequel la tige (56) a une section droite sensiblement circulaire, le conducteur (78) connecté à cette tige présentant l'ouverture dans sa partie plate, cette ouverture centrale ayant un rayon plus petit que le rayon de la section droite de la tige, la périphérie de cette ouverture centrale comportant des fentes radiales permettant la formation de pattes périphériques qui sont décalées par rapport au plan de la partie plane lorsque l'ouverture est initialement disposée autour de la tige afin de rattraper, dès le début, la différence de rayons, et les moyens de compression étant placés sur la tige selon une disposition de compression axiale afin d'obliger les pattes à se réaligner sensiblement dans le plan de la partie plane après compression, la matière constituant ces pattes prenant un état de fluage dans la région de l'interface entre les pattes et la tige après compression afin de rattraper la différence de rayons.

4. Système de coupure de circuits suivant la revendication 3, comprenant une pluralité de ces conducteurs extérieurs et une pluralité de ces moyens de compression interposés sur la tige selon une disposition de compression commune.

5. Système de coupure de circuits suivant la revendication 4, dans lequel cette interposition est formée d'une alternance entre les moyens de compression et les conducteurs extérieurs.

6. Système de coupure de circuits suivant l'une quelconque des revendications 1 à 5, comprenant un appareillage blindé compartimenté (10) comportant un moyen (12) formant coffret métallique, des moyens formant bornes disposés dans ce moyen formant coffret, le moyen de coupure de circuits comprenant les contacts principaux séparables dont l'un communique électriquement avec une borne extérieure de coupure du circuit, le moyen formant conducteur extrérieur étant connecté entre la borne extérieure de coupure du circuit et les moyens formant bornes du coffret, ce moyen formant conducteur étant caractérisé en ce qu'il comprend une ouverture qui est déformable pour permettre le placement du moyen formant conducteur extérieur sur la borne de coupure du circuit, et le moyen de compression coopérant avec ce moyen formant conducteur extérieur et la borne de coupure du circuit pour faire fluer la matière du conducteur dans la région de l'interface entre le moyen formant conducteur extérieur et la borne de coupure du circuit lorsque la force de compression est appliquée avec une composante sensible normale au plan du fluage.

7. Système de coupure de circuits suivant l'une quelconque des revendications 1 à 6, dans lequel sont prévus un moyen formant une borne électrique mobile qui peut se déplacer dans une direction donnée en relation avec une fonction électrique souhaitée, un moyen formant une borne électrique fixe, et l'élément électriquement conducteur fixé à la fois au moyen formant une borne électrique fixe et interconnectant électriquement les deux, cet élément électriquement conducteur étant caractérisé en ce qu'il est sensiblement sans support dans l'espace compris entre le moyen formant borne électrique mobile et le moyen formant borne électrique fixe, tout en étant néanmoins suffisamment souple, en porte-à-faux, pour permettre le déplacement du moyen formant borne électrique mobile.

8. Système de coupure de circuits suivant la revendication 7, dans lequel le rapport de la longueur à l'épaisseur de l'élément conducteur est suffisant pour permettre au moyen formant borne électrique mobile de se déplacer sur une distance prédéterminée dans cette direction sans recontrer de résistance mécanique significative au mouvement de la part de l'élément conducteur.

9. Système de coupure de circuits suivant la revendication 8, dans lequel cet espace est plus court que cette longueur, cet élément conducteur présentant une ondulation dans le sens longitudinal pour pouvoir loger cette longueur dans cet espace.

10. Système de coupure de circuits suivant l'une des revendications 8 ou 9, comprenent une pluralité de ces éléments conducteurs empilés dans le sens du déplacement, la surface de chacun d'eux étant relativement mobile dans le sens longitudinal pour s'adapter au movement élastique de chacun.

11. Système de coupure de circuits suivant la revendication 10, comprenant un élément intermédiaire (126) électriquement isolant entre deux éléments conducteurs contigus dans cet empilement afin d'empêcher entre eux un amorçage d'arc.

## Patentansprüche

1. Ein Schaltkreis-Unterbrechersystem mit Schaltkreis-Unterbrechervorrichtungen (32) zu denen trennbare Kontakte gehören, von denen einer mit einer äußeren Klemme verbunden ist, wobei die genannte Klemme ein Schaft (56) ist, der eine vorbestimmte Querschnittform aufweist, mit einem externen Leiter (78), der mit dem genannten Schaft (56) verbunden ist, wobei der genannte Leiter (78) einen im wesentlichen flachen ebenen Teil mit einer Öffnung aufweist und die Öffnung dieselbe Querschnittsform wie der genannte Schaft (56) besitzt, dadurch gekennzeichnet, daß die genannte Öffnung eine Querschnittsfläche besitzt, die kleiner ist als die Querschnittsfläche des genannten Schafts, daß am Umfang der genannten Öffnung mindestens zwei Schlitze (102) angebracht sind, um mindestens eine Nase (104) auszubilden, die von der Ebene des genannten flachen ebenen Teils abgesetzt ist, wenn die genannte Öffnung anfänglich um den genannten Schaft (56) angeordnet ist, um somit anfänglich den Unterschied der Flächen auszugleichen und daß Kompressionsvorrichtungen (110, 118, 126, 132) vorgesehen sind, die mit dem genannten äußeren Leiter (78) und dem genannten Schaft (56) zusammenwirken, um die genannte mindestens eine Nase (104) zu deformieren und dadurch in den Berührungsbereich zwischen dem genannten äußeren Leiter (78) und den genannten Schaft (56) fließen zu lassen, wenn die Kompressionskraft mit einer wesentlichen Komponente ausgeübt wird, die senkrecht zu der Ebene liegt, die durch den genannten flachen ebenen Teil definiert ist.

2. Ein Schaltkreis-Unterbrechersystem nach Anspruch 1, in dem die Kompressionsvorrichtungen (110, 118, 126, 132) um den genannten Schaft (56) in einer Weise angeordnet sind, daß die genannte Nase (104) im wesentlichen wieder mit der genannten Ebene des genannten ebenen Teils ausgerichtet wird, wobei das Material der genannten Nase in einen Fließzustand im Berührungsbereich zwischen der genannten Nase und dem genannten Schaft nach der Kompression übergeht, um den Flächenunterschied auszugleichen.

3. Ein Schaltkreis-Unterbrechersystem nach Anspruch 1 oder 2, bei dem der genannte Schaft (56) einen im wesentlichen kreisförmigen Querschnitt aufweist, der Leiter (78) mit dem genannten Schaft verbunden ist, der genannte Leiter den flachen ebenen Teil mit der darin befindlichen Öffnung enthält, die genannte Mittelöffnung einen kleineren Radius besitzt als der Radius des Querschnitts des genannten Schafts, der genannte Umfang der genannten Mittelöffnung radiale Schlitze enthält, die die Ausbildung von Umfangsnasen ermöglichen, die von der Ebene der genannten flachen ebenen Oberfläche abgesetzt sind, wenn die genannte Öffnung anfänglich um den genannten Schaft angeordnet ist, um so anfänglich den Unterschied der Radien auszugleichen, und die Kompressionsvorrichtungen um den genannten Schaft in einer Weise angeordnet sind, daß eine axiale Kompression auftritt, die bewirkt, daß die genannten Nasen sich im wesentlichen mit der genannten Ebene des genannten ebenen Teils nach der Kompression ausrichten, wobei das Material der genannten Nasen einen Fließzustand im Berührungsbereich zwischen den genannten Nasen und dem genannten Schaft nach der Kompression einnimmt, um den Unterschied de Radien auszugleichen.

4. Ein Schaltkreis-Unterbrechersystem nach Anspruch 3, in dem eine Vielzahl der genannten äußeren Leiter und eine Vielzahl der genannten Kompressionsvorrichtungen enthalten sind, die auf dem genannten Schaft in einer Weise angeordnet sind, daß eine gemeinsame Kompression erfolgt.

5. Ein Schaltkreis-Unterbrechersystem nach Anspruch 4, bei dem die genannte Anordnung so gewählt ist, daß die genannten Kompressionsvorrichtungen und die genannten äußeren Leiter abwechseln.

6. Ein Schaltkreis-Unterbrechersystem nach einem der Ansprüche 1 bis 5, mit metallverkleideten Schaltgeräten (10), in denen ein Metallschrank und in dem genannten Schrank angeordnete Klemmen enthalten sind, bei dem die Schaltkreis-Unterbrechervorrichtungen die trennbaren Hauptkontakte enthalten, von denen einer elektrisch mit einer äußeren Unterbrecherklemme in Verbindung steht, der äußere Leiter zwischen der genannten äußeren Schaltkreisunterbrecherklemme und der genannten Schrankklemme verbunden ist, wobei der genannte Leiter durch die darin befindliche Öffnung charakterisiert ist, die deformiert werden kann, um das Einführen des genannten äußeren Leiters in die genannte Schaltkreisunterbrecherklemme zu ermöglichen und die Kompressionsvorrichtungen mit dem genannten äußeren Leiter und der genannten Schaltkreisunterbrecherklemme zusammenwirken, um zu veranlassen, daß das Material des genannten Leiters in den Bereich der ganannten Berührung zwischen dem genannten äußeren Leiter und der genannten Schaltkreisunterbrecherklemme fließt, wenn die Kompressionskraft mit einer wesentlichen Komponente ausgeübt wird, die senkrecht zur Fließrichtung liegt.

7. Ein Schaltkreis-Unterbrechersystem nach einem der Ansprüche 1 bis 6, in dem bewegliche elektrische Klemmenvorrichtungen vorgesehen sind, die in einer gegebenen Richtung bezüglich einer gewünschten elektrischen Funktion bewegbar sind sowie feste elektrische Klemmenvorrichtungen und das elektrisch leitfähige Element fest sowohl mit den genannten bewegbaren elektrischen Klemmenvorrichtungen und den genannten festen elektrischen Klemmenvorrichtungen verbunden ist und beide elektrisch verbindet, wobei das genannte elektrisch leitfähige Element so charakterisiert ist, daß es sich im Abstandsbereich zwischen den genannten beweglichen elektrischen Klemmenvorrichtungen und den genannten festen elektrischen Klemmenvorrichtungen im wesentlichen selbst trägt, aber trotzdem in Art eines überstehenden Balkens so beweglich ist, daß es die Bewegung der genannten beweglichen elektrischen Klemmenvorrichtungen erlaubt.

8. Ein Schaltkreis-Unterbrechersystem nach Anspruch 7, bei dem das Verhältnis von Länge zu Dicke des genannten Leitfähigen elements ausreicht, um eine Bewegung der genannten elektrischen Klemmenvorrichtungen über eine vorbestimmte Distanz in der genannten Richtung zu erlauben, ohne dabei einen ins Gewicht fallenden mechanischen Widerstand gegen diese Bewegung zu erzeugen.

9. Ein Schaltkreis-Unterbrechersystem nach Anspruch 8, in dem der genannte Abstandsbereich kürzer ist als die genannte Länge und das genannte leitfähige Element in Längsrichtung eine Wellenform aufweist, um die genannte Länge dem genannten Abstandsbereich anzupassen.

10. Ein Schaltkreis-Unterbrechersystem nach Anspruch 8 oder 9, mit einer Vielzahl der genannten leitfähigen Elemente, die in Richtung der genannten Bewegung gestapelt sind, wobei die Oberfläche eines jeden in Längsrichtung relativ bewegbar ist, um die flexible Bewegung eines jeden zu erlauben.

11. Ein Schaltkreis-Unterbrechersystem nach Anspruch 10, mit einem elektrisch isolierenden Abstandshalter (186) zwischen zwei benachbarten leitfähigen Elementen im genannten Stapel um dazwischen die Ausbildung von Lichtbögen zu verhindern.

FIG.I.

FIG.2.

FIG.3.

FIG.4.

FIG.5.

FIG.6.

FIG.8.

FIG.7.

FIG.10.

FIG.9.

FIG.12.

FIG.11.

FIG.14.

FIG.13.

FIG.16.

FIG.15.

FIG.19.

140

142

138

FIG.18.

140

142

138

148 144

146

FIG.17.

138

142

140

8

0 058 519

FIG.20.

FIG. 21.

0 058 519

FIG. 22.

0 058 519

FIG.23.

FIG.24.

FIG.25.